# EUROPEAN PATENT APPLICATION

(11) **EP 2 631 722 A2**
(43) Date of publication of application: **28.08.2013**
(21) Application number: 13156232.4
(22) Date of filing: 21.02.2013
(51) Int. Cl.: G04G 5/00

(54) **Information processing apparatus, control method therefor, and recording medium**

(30) Priority: 23.02.2012 JP 2012037577
(71) Applicant: CANON KABUSHIKI KAISHA, Ohta-ku Tokyo 146-8501 (JP)
(72) Inventor: Takagi, Toshiyuki, Ohta-ku, Tokyo (JP)
(74) Representative: Walker, Philip Martin

(57) **Abstract**

An information processing apparatus (100) for communicating with a first external device (300) storing first time information and a second external device (400, 500) storing second time information, the information processing apparatus (100) comprising storage means for storing third time information, reception means (308) for receiving first time information from the first external device, time adjustment means for regularly adjusting the third time information based on first time information , operation means (107) for receiving a synchronization instruction from a user, time synchronization means for communicating with the second external device and synchronizing the second time information and the third time information if the synchronization instruction is received by the operation means (107, and notification means for, in a case of the synchronization instruction being received by the operation means (107), notifying the user that the third time information can be adjusted by the time adjustment means.

## Description

### BACKGROUND OF THE INVENTION

### Field of the Invention

The present invention relates to an information processing apparatus capable of synchronizing time with an external device.

### Description of the Related Art

Systems for synchronizing clocks of a plurality of devices with each other to indicate common time have been known. For example, Japanese Patent Application Laid-Open No.8-305900 discusses a technique in which a reference apparatus provides time information to other devices at a predetermined interval. Based on the provided time information, the other devices synchronize their clocks with the time of the reference apparatus. For example, in a case where a user gathers and edits image data captured by a plurality of digital cameras, if the times in the individual digital cameras are different, the time stamps are not arranged in the chronological order of actual shooting date and time. The above technique is used to solve such a problem.

Meanwhile, among the devices capable of clocking the time, in order to more correctly adjust time in their own devices, some devices have a function of regularly acquiring more correct time information from another device. For example, Japanese Patent Application Laid-Open No. 9-116536 discusses a network monitoring device capable of acquiring more correct time information from a network. The device regularly adjusts the time information of its own device based on the acquired time information. The time indicated by the time information acquired from the network is more correct than the time in the network monitoring device. Consequently, the time in the device can be kept with constant accuracy.

The devices that can clock time can be provided with the above-mentioned two functions. The combination of the time synchronization function for synchronizing clocks of the devices and the time adjustment function for adjusting time to correct time, however, may cause some inconveniences. For example, while the time adjustment function regularly executes the time adjustment, a user may execute the time synchronization without noticing that the time adjustment function is operating. In such a case, even if the user synchronizes time with other devices by the time synchronization function, after a predetermined time period elapses, the time adjustment is automatically performed by the time adjustment function. As described above, in the devices having both the time synchronization function and the time adjustment function, there is a possibility that the times in the individual devices are changed at time not intended by the user.

### SUMMARY OF THE INVENTION

The present invention in its first aspect provides an information processing apparatus as specified in claims 1 to 11. In a further aspect the present invention provides a method as set out in claim 12. In another aspect the present invention provides a computer program as set out in claim 13.

According to embodiments of the present invention, the time in a device being changed at time not intended by the user can be prevented.

Further features and aspects of the present invention will become apparent from the following detailed description of embodiments with reference to the attached drawings.

### BRIEF DESCRIPTION OF THE DRAWINGS

The accompanying drawings, which are incorporated in and constitute a part of the specification, illustrate embodiments, features, and aspects of the invention and, together with the description, serve to explain the principles of the invention.

Fig. 1 illustrates a system configuration according to a first embodiment.

Fig. 2 illustrates a configuration of an information processing apparatus according to the first embodiment.

Fig. 3 illustrates a configuration of an external clock device according to the first embodiment.

Fig. 4 illustrates a sequence of processing for adjusting time information of of an information processing apparatus with time information of an external clock device to be performed by the information processing apparatus according to the first embodiment.

Fig. 5 schematically illustrates a sequence of processing for adjusting time among a plurality of information processing apparatuses according to the first embodiment.

Figs. 6, 6a and 6b together show a flowchart illustrating processing for adjusting time among the information processing apparatuses according to the first embodiment.

Fig. 7 illustrates a warning screen for displaying a warning in the time adjustment processing among the apparatuses according to the first embodiment.

Fig. 8 illustrates screen transition in the process of adjusting time among the information processing apparatuses according to the first embodiment.

Figs. 9, 9a and 9b together show a flowchart illustrating processing for adjusting time among a plurality of information processing apparatuses according to a second embodiment.

Figs. 10, 10a and 10b together show a flowchart illustrating processing for adjusting time among a plurality of information processing apparatuses according to a third embodiment.

Fig. 11 illustrates a warning screen for displaying a warning in the time adjustment processing among the devices according to the third embodiment.

Figs. 12, 12a and 12b together show a flowchart illustrating processing for adjusting time among a plurality of information processing apparatuses according to a fourth embodiment.

Fig. 13 illustrates a warning screen for displaying a warning in the time adjustment processing among the devices according to the fourth embodiment.

Figs. 14, 14a and 14b together show a flowchart illustrating processing for adjusting time among a plurality of information processing apparatuses according to a fifth embodiment.

### DESCRIPTION OF THE EMBODIMENTS

Various embodiments, features, and aspects of the invention will be described in detail below with reference to the drawings.

The embodiments described below are only examples for implementing the present invention, and various modifications and changes can be made as needed depending on the configurations of the devices to which the embodiments of the present invention are applied and various conditions. Further, any combination of the embodiments can be employed as needed.

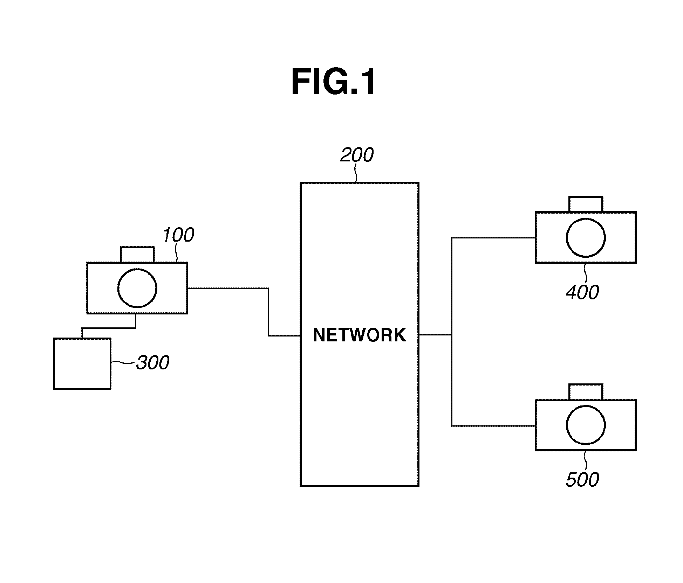

Fig. 1 illustrates a system configuration according to the first embodiment.

An information processing apparatus 100 is connected to an information processing apparatus 400 and an information processing apparatus 500 via a network 200. The information processing apparatus 400 and the information processing apparatus 500 are examples of a second external device. In the embodiment, a wireless local area network (LAN) is employed as the network 200. The network 200 is not limited to the wireless LAN. For example, the network 200 can be a network employing an infrared communication, or a network employing Bluetooth (registered trademark). Alternatively, other wired networks can be employed.

The information processing apparatus 100 is connected to an external clock device 300. The external clock device 300 is an example of a first external device. The information processing apparatus 100 can be connected with the external clock device 300 with a wired or wireless connection. Alternatively, the external clock device 300 can be provided within the information processing apparatus 100. In the embodiment, the external clock device 300 is connected to the information processing apparatus 100 with a wire.

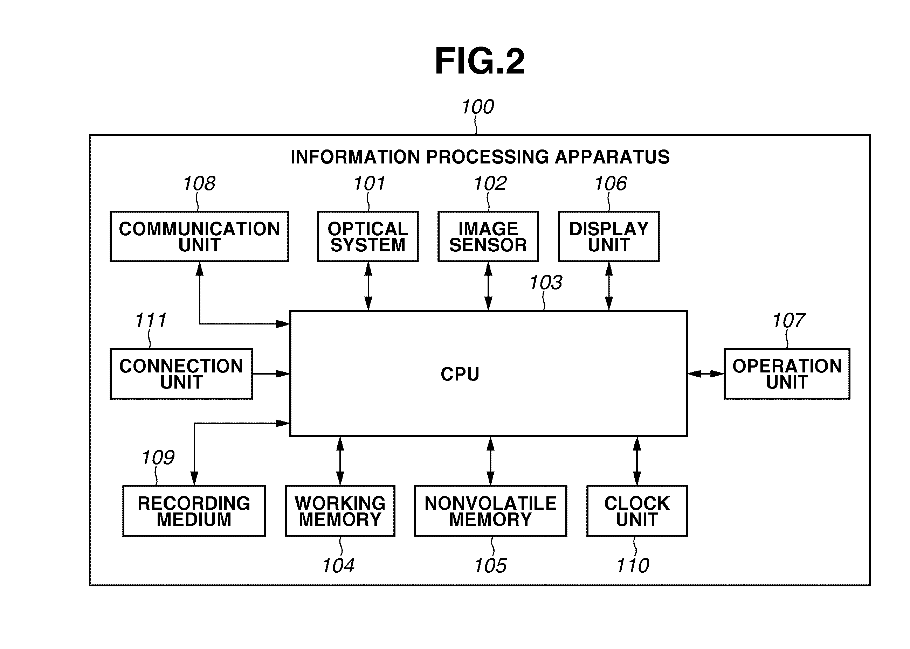

Fig. 2 illustrates a configuration of the information processing apparatus 100. In this embodiment, a digital camera is employed as the information processing apparatus 100. The information processing apparatus 100 is, however, not limited to a digital camera. For example, a personal computer or a cellular phone can be employed as the information processing apparatus 100.

An optical system 101 includes a lens unit, a diaphragm, and a shutter. An image sensor 102 converts an optical object image into an electrical signal.

A central processing unit (CPU) 103 performs shooting control, storage control, communication control, and time control according to an input signal from each unit or a program described below. The control to be performed by the CPU 301 may be performed with one hardware device. Alternatively, the overall control of the apparatus may be performed with a plurality of hardware devices which share the processing.

A nonvolatile memory 105 stores a program (firmware) for controlling each unit in the information processing apparatus 100 and various kinds of setting information. The nonvolatile memory 105 also stores a program for the CPU 103 to control the processing illustrated in each flowchart described below.

A working memory 104 is used when the CPU 103 loads the program stored in the nonvolatile memory 105. The working memory 104 is used as a work area for the CPU 103.

A display unit 106 includes a thin-film transistors (TFT) and a liquid crystal display (LCD). It is not always necessary that the display unit 106 is provided in the information processing apparatus 100. The information processing apparatus 100 can be connected to the display unit 106, and the apparatus 100 includes at least a display control function for controlling the display on the display unit 106.

An operation unit 107 is used when a user instructs operation of the digital camera. The operation unit 107 includes operation members, for example, a power button for instructing ON/OFF of the power supply of the information processing apparatus 100, and a selection button for selecting an item from a menu. The operation unit 107 includes, for example, various kinds of buttons and dials, and a touch panel.

A communication unit 108 serves as a communication interface for communicating with the information processing apparatus 400 and the information processing apparatus 500. In the embodiment, the communication unit 108 is an antenna. Via the antenna, the CPU 103 can communicate with the information processing apparatus 400 and the information processing apparatus 500. The wireless communication method can be, for example, a wireless LAN, or Bluetooth.

As mentioned above, communication methods other than the wireless communication can be employed for the communication among the information processing apparatus 100, the information processing apparatus 400 and the information processing apparatus 500. In other words, for example, a USB port, or an accessory shoe having a communication function can be employed for the communication unit 108.

A connection unit 111 serves as a communication interface for communicating with the external clock device 300. In the embodiment, the connection unit 111 is an accessory shoe having a communication function, and the CPU 103 can communicate with the external clock device via the accessory shoe. The connection unit 111 is not limited to the accessory shoe. The connection unit 111 can be, for example, a USB port. As mentioned above, the communication method between the information processing apparatus 100 and the external clock device 300 is not limited to the wire communication. Alternatively, wireless communication can be employed. In a case where the information processing apparatus 100 wirelessly communicates with the external clock device 300, as the connection unit 111, for example, an antenna is employed.

A recording medium 109 records image data acquired in image capturing. The recording medium 109 can be attachable and detachable to and from the information processing apparatus 100, or can be provided within the information processing apparatus 100. In other words, the information processing apparatus 100 includes at least a means for accessing the recording medium 109.

A clock unit 110 serves as a timer. Specifically, the clock unit 110 includes an internal register, and stores time information in the internal register. The clock unit 110 increments the time information stored in the internal register for each unit time and with the operation, the clock unit 110 clocks time. The clock unit 110 can receive time information. For example, to the clock unit 110, time information indicating the time specified through operation of the operation unit 107 by the user can be input, or time information received from the external clock device 300 can be input. The input time information is newly stored in place of the time information stored in the clock unit 110. In a case where time information is input, the clock unit 110 clocks time based on the time indicated by the input time information.

Further, the clock unit 110 outputs time information as time used in the information processing apparatus in response to a request from the CPU 103. The output time information is, for example, displayed on the display unit 106, or transmitted to the outside via the communication unit 108. The time information in the information processing apparatus 100 is an example of what will be referred to as third time information.

The information processing apparatus 400 and the information processing apparatus 500 have a configuration similar to that of the information processing apparatus 100. The time information in the information processing apparatus 400 and the information processing apparatus 500 is an example of what will be referred to as first time information.

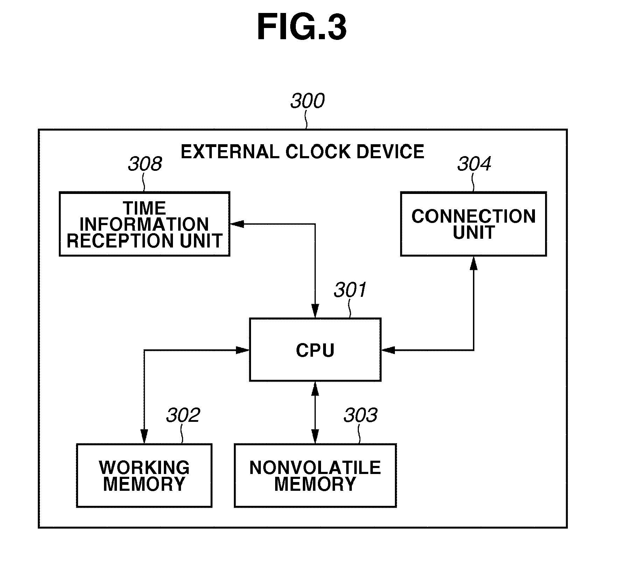

The information processing apparatus 100 has been described above. Next, the external clock device 300 is described. Fig. 3 illustrates a configuration of the external clock device 300. In this embodiment, a global positioning system (GPS) accessory is employed as the external clock device 300. The external clock device 300 is not limited to the GPS accessory. For example, the external clock device 300 can be a device capable of receiving a signal from a base station such as a cellular phone.

The CPU 301 performs storage control and communication control according to an input signal from each unit or a program. The control to be performed by the CPU 301 may be performed with one hardware device. Alternatively, the overall control of the apparatus may be performed with a plurality of hardware devices which share the processing.

A nonvolatile memory 303 stores a program (firmware) for controlling each unit in the external clock device 300 and various kinds of setting information.

A working memory 302 is used when the CPU 301 loads the program stored in the nonvolatile memory 303. The working memory 302 is used as a work area for the CPU 301.

A connection unit 304 is used to communicate with an external device. In the embodiment, the connection unit 304 is an accessory shoe, and connected with the connection unit 111 in the information processing apparatus 100. The CPU 301 can communicate with the information processing apparatus 100 via the accessory shoe. The connection unit 304 is not limited to the accessory shoe. The connection unit 304 can be, for example, a USB port. As mentioned above, the communication method between the information processing apparatus 100 and the external clock device 300 is not limited to the wire communication. Alternatively, wireless communication can be employed. In a case where the external clock device 300 wirelessly communicates with the information processing apparatus 100, as the connection unit 304, for example, an antenna is employed.

A time information reception unit 308 receives a signal including time information from a GPS satellite. The CPU 301 acquires time information from the received signal. In general, the time indicated by the time information acquired from the signal received by the time information reception unit 308 is more correct than the time clocked by the clock unit 110 in the information processing apparatus 100. The time information acquired from the signal received by the time information reception unit 308 is stored in the working memory 302. The acquisition of the time information and the storage of the time information are regularly performed.

The stored time information can be sent via the connection unit 304 in response to a request from the outside. The time information is an example of the second time information. The signal containing the time information is not limited to the signal from the GPS satellite. For example, the time information reception unit 308 can receive a time calibration signal sent from a time calibration signal transmitter station, or a signal from a base station of cellular phones.

The external clock device 300 has been described above.

The information processing apparatus 100 according to this embodiment has a function of adjusting time using the external clock device 300. The time adjustment function is performed to more correctly adjust the time clocked by the clock unit 110 in the information processing apparatus 100. Hereinafter, the time adjustment function is described.

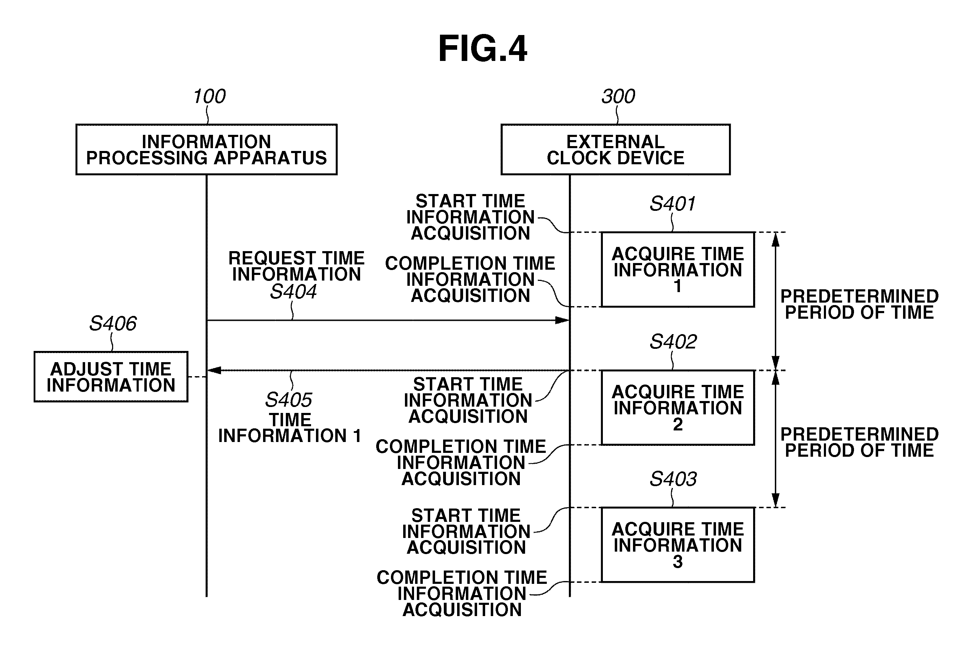

Fig. 4 illustrates a sequence of the time adjustment with the time information in the external clock device 300. The drawing illustrates processes to be time-sequentially performed by the external clock device 300 and the information processing apparatus 100. As mentioned above, the external clock device 300 regularly acquires the time information from the GPS satellite with the time information reception unit 308.

The processes in steps S401, S402, and S403 are an example of the processing of acquiring the time information regularly performed in the external clock device 300. In each step, time information 1, time information 2, and time information 3 are acquired respectively. If the information processing apparatus 100 receives a time adjustment instruction, the process in step S404 is performed. In step S404, the information processing apparatus 100 requests the time information from the external clock device 300.

Fig. 4 illustrates a case the external clock device 300 receives the request between step S401 and step S402. The request is sent at timing according to an instruction from the user of the information processing apparatus 100. Consequently, in general, the time at which the external clock device 300 acquires the time information differs from the time at which the information processing apparatus 100 requests the external clock device 300 to send the time information. In other words, the time information 1 acquired in step S401 is not the time when the request is received. Consequently, even if the information processing apparatus 100 receives the time information 1 at the timing according to the request, it is difficult to set a correct time.

To solve the problem, in this embodiment, the following process is performed. The external clock device 300 that has received the request of the time information waits for the next timing without immediately sending the time information 1 to the information processing apparatus 100. That is, in step S402, the external clock device 300 waits for timing at which a process for acquiring the time information 2 from the GPS satellite starts. In step S402, in response to the start of the process of acquiring the time information 2, at this timing, the external clock device 300 sends the time information 1 to the information processing apparatus 100.

As mentioned above, the acquisition of the time information from the GPS satellite is regularly performed by the external clock device 300. For example, in step S402, the start time is the time when a predetermined period of time has passed since the start of the process in step S401. In other words, the start timing in step S402 is equal to the time calculated by adding the period of time for regularly acquiring the time information from the GPS satellite by the external clock device 300, to the time indicated by the time information 1. That is, in step S406, the information processing apparatus 100 can adjust the time to the current time with constant accuracy by adding the period of time in which the external clock device 300 acquires the time information, to the time indicated by the received time information 1.

The time period for the external clock device 300 to acquire the time information from the GPS satellite may be obtained from the external clock device 300, for example, at the time the information processing apparatus 100 starts the communication with the external clock device 300, so that the information processing apparatus 100 can use the obtained time period. Alternatively, the time period may be hard-coded in the information processing apparatus 100 such that the same value as the time period for acquiring the time in the external clock device 300 is set in advance. This processing is performed for the following reason.

As illustrated in Fig. 4, the time information acquisition process takes a certain period of time since the acquisition process requires processes of receiving and decoding a signal, and calculating time information. The time indicated by the acquired time information is, however, not the time when the time information acquisition process is completed, but the time the process is started. In other words, even though the time information 2 is immediately sent to the information processing apparatus 100 to adjust the time at the timing the process in step S402 is completed, an error corresponding to the time period necessary for the acquisition process occurs.

To avoid the error, at the timing of the start of the next time information acquisition performed after the time information request is received, the external clock device 300 according to this embodiment sends the time information acquired right before the timing of the reception of the time information request, to the information processing apparatus 100. The time information adjustment function can be enabled or disabled (hereinafter, referred to as ON or OFF) according to an instruction by the user, or the like. If the user inputs an instruction for setting the time information adjustment function to ON via the operation unit 107, processes similar to those in steps S404 to S406 are repeatedly performed every predetermined time period.

The time information received from the external clock device 300 is included in the signal the external clock device 300 acquired from the GPS satellite. As mentioned above, generally, the time indicated by the time information acquired by the external clock device is more correct than the time clocked by the clock unit 110 in the information processing apparatus. Consequently, the time in the information processing apparatus can be always kept with constant accuracy by the series of processes which are regularly and repeatedly performed to acquire the time information from the external clock device 300 and adjust the time clocked by the clock unit 110 based on the acquired time information.

Meanwhile, if the time information adjustment function is OFF, the series of processes for acquiring the time information from the external clock device 300 and adjusting the time clocked by the clock unit 110 based on the acquired time information is not performed. In addition to the function of regularly adjusting the time information, a function of adjusting the time information at timing specified by the user may also be provided. When the user inputs an adjustment instruction for adjusting the time information at specified timing, separately from the regular time information adjustment, processes similar to those in steps S404 to S406 are performed only once.

The processes similar to those in steps S401 to 403 are regularly performed irrespective of ON/OFF of the adjustment function in the information processing apparatus 100.

The time information adjustment processing has been described above.

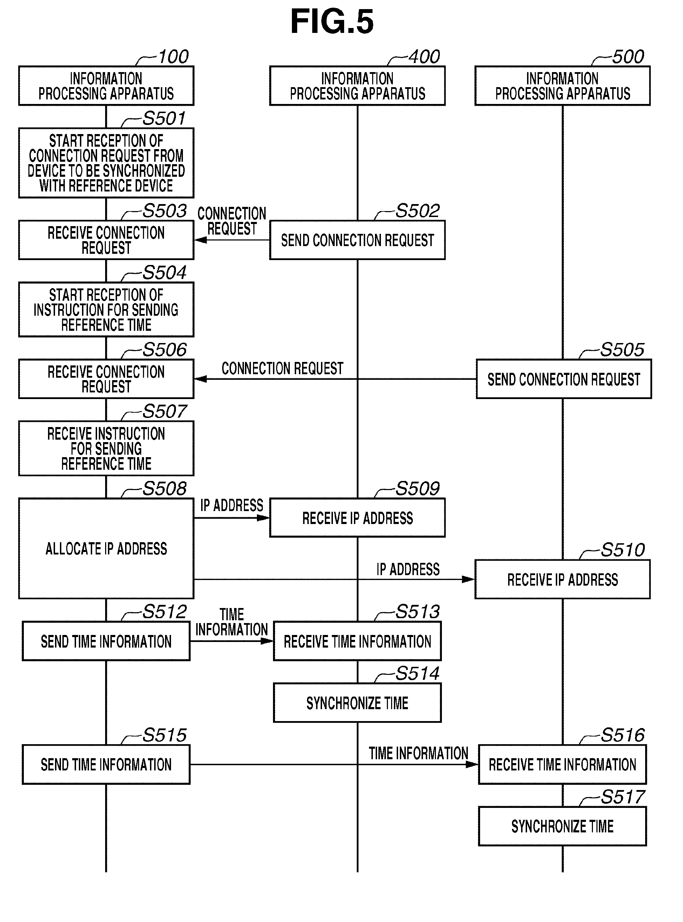

A procedure outline for time synchronization among wirelessly connected information processing apparatuses is described. Fig. 5 illustrates a sequence of the procedure for synchronizing time among the information processing apparatuses. In this example, the information processing apparatus 100 serves as a reference device that sends the reference time, and the information processing apparatus 400 and the information processing apparatus 500 serve as synchronizing devices that synchronize time information of their own devices with the time information sent form the reference device.

First, in step S501, the information processing apparatus 100 that serves as the reference device starts reception of a connection request. The connection request is sent from the information processing apparatus 400 or the information processing apparatus 500 that serves as the synchronizing device. Each information processing apparatus stores in advance a service set identifier (SSID) and an encryption key to be commonly used. Using such ID and encryption key, the information processing apparatus 400 and the information processing apparatus 500 can send the connection request to the information processing apparatus 100.

The user issues an instruction to send the connection request to the reference device via the operation unit 107 in the information processing apparatus 400. In response to the instruction, in step S502, the connection request is sent from the information processing apparatus 400 to the information processing apparatus 100. The connection request includes the media access control (MAC) address of the information processing apparatus 400.

In step S503, the information processing apparatus 100 receives the connection request from the information processing apparatus 400. The information processing apparatus 100 associates an Internet Protocol (IP) address automatically specified by the information processing apparatus 100 with the MAC address of the information processing apparatus 400 included in the received connection request. The relationship between the MAC address and the IP address is stored in the working memory 302 in the information processing apparatus 100.

In step S504, the information processing apparatus 100 starts reception of an instruction for sending the reference time information. The process in step S501 is continuously performed in parallel with the process in step S504. In other words, after the start of the reception of the instruction for sending the reference time information, the information processing apparatus 100 can receive a connection request from the synchronizing devices.

The user issues an instruction to send the connection request to the reference device via the operation unit 107 in the information processing apparatus 500. In response to the instruction, in step S505, the connection request is sent from the information processing apparatus 500 to the information processing apparatus 100. The connection request includes the MAC address of the information processing apparatus 500.

In step S506, the information processing apparatus 100 receives the connection request from the information processing apparatus 500. The information processing apparatus 100 associates an IP address automatically specified by the information processing apparatus 100 with the MAC address of the information processing apparatus 500 included in the received connection request. The IP address associated in this process is determined such that the IP address differs from the IP address associated with the MAC address of the information processing apparatus 400. The relationship between the MAC address and the IP address is stored in the working memory 302 in the information processing apparatus 100.

In step S507, the information processing apparatus 100 receives an instruction for sending the reference time information to the synchronizing devices whose connection requests have been received.

In step S508, the information processing apparatus 100 allocates an IP address to each synchronizing device. Specifically, the information processing apparatus 100 sends the MAC address of each synchronizing device whose connection request has been received and the data indicating the relationship between the IP address associated with the MAC address, to each synchronizing device. In this process, as mentioned above, the data is sent to each synchronizing device with the SSID and the encryption key commonly stored in each information processing apparatuses.

In steps S509 and S510, the information processing apparatus 400 and the information processing apparatus 500 that receive the data refer to the data, and set the IP addresses associated with the MAC addresses of their own devices as IP addresses of their own devices. Thus, the connection is established between the information processing apparatus 100 and the information processing apparatus 400, and the connection is established between the information processing apparatus 100 and the information processing apparatus 500. In the following processes, using the IP addresses, the communication among the devices is performed.

After the IP addresses are allocated to the synchronizing devices, in step S512, the information processing apparatus 100 sends the reference time information using the IP addresses. The time information is the information of the clock unit 110 in the information processing apparatus 100. In step S513, the information processing apparatus 400 receives the time information from the information processing apparatus 100. In step S514, the information processing apparatus 400 records the received time information in the register in the clock unit 110 of its own device. Thus, the time in the information processing apparatus 400 is synchronized with the time in the information processing apparatus 100.

The clock unit 110 in the information processing apparatus 400 increments itself to the received time information to clock the time in the information processing apparatus 400. In steps S515 to S517, on the information processing apparatus 500, processes similar to those in steps S512 to S514 are performed. The transmission of the time information is performed in the order the connection requests are received.

The process of time synchronization ends when the time in each device synchronizes with the time in the reference device. The outline procedure of the time synchronization among the information processing apparatuses has been described above.

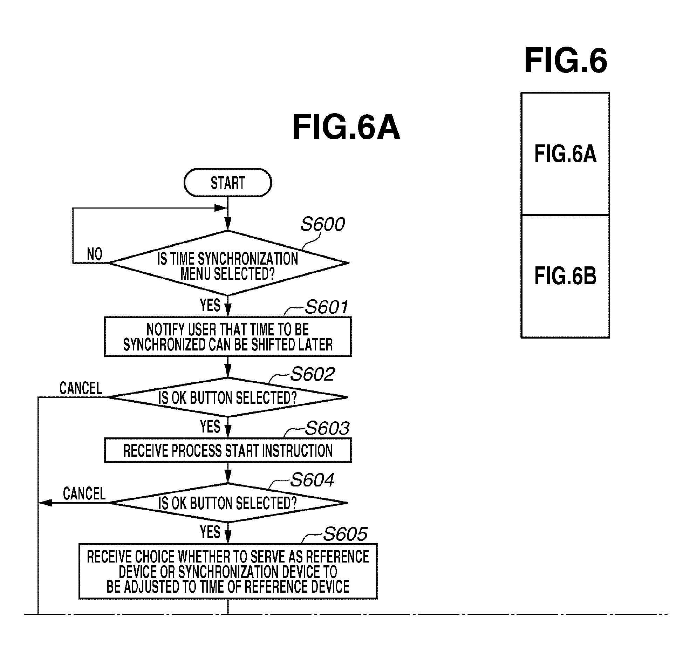

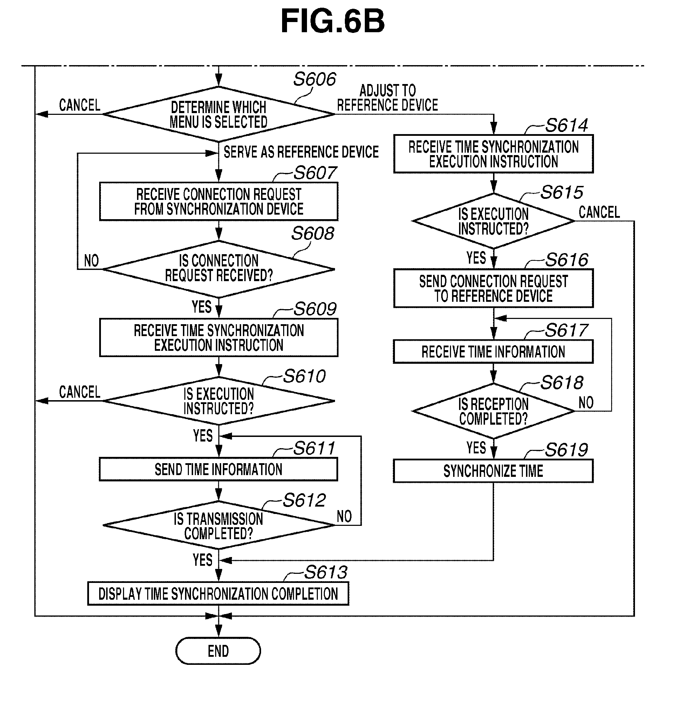

Processes performed in the time synchronization in each information processing apparatus will be described in detail. Fig. 6 is a flowchart illustrating processes for synchronizing the time information in the clock units 110 in the information processing apparatus 100, the information processing apparatus 400, and the information processing apparatus 500 in Fig. 1. The processes illustrated in the flowchart are performed in each of the information processing apparatus 100, the information processing apparatus 400, and the information processing apparatus 500. The processes illustrated in the flowchart are realized by the CPU 103 loading a program stored in the nonvolatile memory 105 to expand the program in the working memory 104, and controlling each unit in the information processing apparatuses according to the program. Each process in the following flowcharts is similarly realized. The processes illustrated in the flowchart are, for example, started in response to an operation of turning on the power of the information processing apparatus.

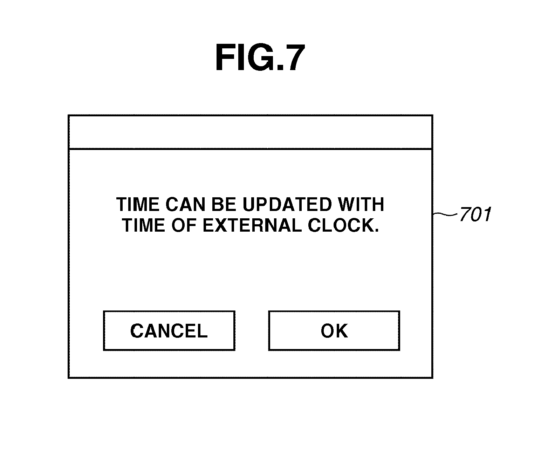

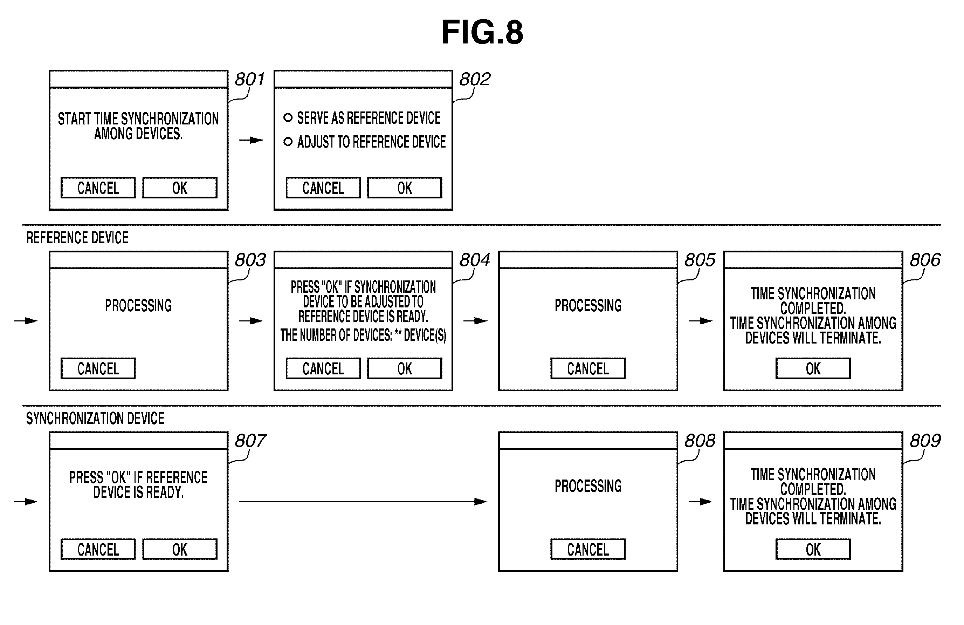

With reference to the display screens in Figs. 7 and 8, the processes in the flowchart in Fig. 6 are described.

In step S600, the CPU 103 receives a selection of a menu for performing the time synchronization with the other devices via the operation unit 107. Through the menu selection, the user can input an instruction for performing the time synchronization with the other devices. The menu selection is an example of a predetermined synchronization instruction. If the CPU 103 determines that the menu for performing the time synchronization with the other devices is not selected (NO in step S600), the process in this step is repeated. If the CPU 103 determines that the menu for performing the time synchronization with the other devices is selected (YES in step S600), the process proceeds to step S601.

In step S601, the CPU 103 notifies the user that the time information stored in the clock unit 110 in its own device can be updated with the time information in the external clock device 300. For example, the CPU 103 displays, on the display unit 106, a message "TIME CAN BE UPDATED WITH TIME IN EXTERNAL CLOCK" shown in the display example in a screen 701 in Fig. 7. The display enables, before the time synchronization is performed, the user who is going to perform the time synchronization, to know that the time in its own device can be shifted later with the time adjustment function. Further, buttons displaying "CANCEL" and "OK" are displayed together. The user can select the buttons via the operation unit 107. The "CANCEL" button is used to terminate the process. The "OK" button is used to go through the process.

In step S602, the CPU 103 determines whether the "OK" button is selected or the "CANCEL" button is selected via the operation unit 107. If the CPU 103 determines that the "CANCEL" button is selected (CANCEL in step S602), the process ends. If the CPU 103 determines that the "OK" button is selected (YES in step S602), the process proceeds to step S603.

In step S603, the CPU 103 displays a screen like a screen 801 in Fig. 8 on the display unit 106. On the screen 801, a message "START TIME SYNCHRONIZATION AMONG DEVICES." is displayed. With the display, the CPU 103 notifies the user that the synchronization of the time in its own device and the time in the other device is going to be started. Similarly to step S601, the "OK" button and the "CANCEL" button are displayed together. The user can select the buttons via the operation unit 107.

In step S604, the CPU 103 determines whether the user has selected the "CANCEL" button or the "OK" button. If the CPU 103 determines that the "CANCEL" button is selected (CANCEL in step S604), the process ends. If the CPU 103 determines that the "OK" button is selected (YES in step S604), the process proceeds to step S605.

In step S605, the CPU 103 receives an instruction for setting its own device as the reference device that transmits the reference time information for the time synchronization, or an instruction for setting its own device as a synchronizing device that receives the reference time information from the reference device and synchronizes the time in its own device. In this step, the CPU 103 displays a screen like a screen 802 in Fig. 8 on the display unit 106.

On the screen 802, menus such as "SERVE AS REFERENCE DEVICE" and "ADJUST TO REFERENCE DEVICE" are displayed. If the user selects "SERVE AS REFERENCE DEVICE" via the operation unit 107, and further selects the "OK" button, the CPU 103 determines that the instruction for setting its own device as the reference device is received. If the user selects "ADJUST TO REFERENCE DEVICE" via the operation unit 107, and further selects the "OK" button, the CPU 103 determines that the instruction for setting its own device as the synchronizing device is received.

In step S606, the CPU 103 identifies the instruction received in step S605. If the CPU 103 determines that the "CANCEL" button is selected (CANCEL in step S606), the process ends. If the CPU 103 determines that the instruction for setting its own device as the synchronizing device is received (ADJUST TO REFERENCE DEVICE in step S606), the process proceeds to step S614. If the CPU 103 determines that the instruction for setting its own device as the reference device is received (SERVE AS REFERENCE DEVICE in step S606), the process proceeds to step S607.

First, the case where the instruction for setting its own device as the reference device is described.

In step S607, the CPU 103 receives a connection request from a synchronizing device via the communication unit 108. This process corresponds to the process in step S501 in Fig. 5. In this process, the CPU 103 displays a screen like a screen 803 in Fig. 8 on the display unit 106. With the display, the CPU 103 notifies the user that connection requests are in process of receiving from the synchronizing devices. The "CANCEL" button is still displayed even during the connection request reception period. In other words, even in the connection request reception period, the CPU 103 can receive an instruction to terminate the process. If the CPU 103 determines that the "CANCEL" button is selected, the process ends.

In step S608, the CPU 103 determines whether a connection request from a synchronizing device is received. If the CPU 103 determines that a connection request from a synchronizing device is not received (NO in step S608), the process returns to step S607. If the CPU 103 determines that a connection request from a synchronizing device is received (YES in step S608), the process returns to step S609. This process corresponds to the process in step S503 in Fig. 5.

As mentioned in the description with reference to Fig. 5, the connection request includes the MAC address of the source synchronizing device, and the information processing apparatus 100 associates the MAC address with an IP address, and stores the information. If a plurality of connection requests is received, with each MAC address included in each connection request, an IP address is associated. These IP addresses differ from each other. The IP addresses are allocated to the synchronizing devices corresponding to the MAC addresses later respectively.

In step S609, the CPU 103 receives an instruction for sending the time information of the reference device to the synchronizing device. In this process, as determined in step S606, since the reference device is its own device, the time information to be transmitted is the time information in its own device.

This process corresponds to the process in step S504 in Fig. 5. In this step, the CPU 103 displays a screen like a screen 804 in Fig. 8 on the display unit 106. On the screen 804, a notification "PRESS "OK" IF SYNCHRONIZATION DEVICE TO BE ADJUSTED TO REFERENCE DEVICE IS READY." is displayed. With the display, the CPU 103 instructs the user to start the process of sending the time information after all synchronizing devices are ready for reception of the time information from the reference device.

The state where the synchronizing devices are ready for reception of the time information from the reference device is a state where the processes performed in the synchronizing devices proceed to the process in step S616 described below. The processes in step S607 and step S608 are continuously performed in step S609. In other words, even after the screen like the screen 804 is displayed on the display unit 106, connection requests from the synchronizing devices can be still received. That is, if a plurality of synchronizing devices is provided, connection requests after the second device are received in the process in step S607 that is performed in parallel with the process in step S609.
For example, this process corresponds to the process in step S506 in Fig. 5.

Further, the number of synchronizing devices whose connection requests have already been received is displayed. During the processing in step S609, if the CPU 103 receives a connection request from a synchronizing device, the CPU 103 updates the display of the number of synchronizing devices whose connection requests have been received on the display in the screen 804.

Similarly to step S601, the "OK" button and the "CANCEL" button are displayed together. The user selects these buttons via the operation unit 107 to input the instruction corresponding to the selected button. For example, in the example in Fig. 1, the synchronizing devices are only two devices, that is, the information processing apparatus 400 and the information processing apparatus 500. Consequently, if the connection requests from the information processing apparatus 400 and the information processing apparatus 500 are received, all connection requests from the synchronizing devices are received. In such a case, if the user selects the "OK" button, an instruction for sending the reference time information to these synchronizing devices can be issued.

In step S610, the CPU 103 determines whether the instruction for sending the time information is received in step S609. If the CPU 103 determines that the "CANCEL" button is selected (CANCEL in step S610), the process ends. If the CPU 103 determines that the "OK" button is selected (YES in step S610), the process proceeds to step S611. This process corresponds to the process in step S507 in Fig. 5.

In step S611, the CPU 103, via the communication unit 108, establishes communication with the synchronizing devices whose connection requests have been received. This process corresponds to the process in step S508 in Fig. 5. In other words, each of the synchronizing device identifies and sets its own IP address sent from the reference device, and thereby the communication is established.

After the communication is established in such a way, the CPU 103 sends the time information in its own device that serves as the reference device, to the synchronizing devices. This process corresponds to the processes in step S512 and the step S515 in Fig. 5. In this process, the CPU 103 displays a screen like a screen 805 in Fig. 8 on the display unit 106. The screen is similar to the screen 803 in Fig. 8, and consequently, its description is omitted.

In step S612, the CPU 103 determines whether the time information of its own device that serves as the reference device has been received in all synchronizing devices whose connection requests have been received in step S607. Specifically, for example, if the time information in the reference device is received by the synchronizing device, the synchronizing device sends a signal indicating the completion of reception, to the reference device. The reference device receives the signal indicating the reception completion from the synchronizing device and thereby the reference device determines that the time information has been received by the synchronizing device.

If the CPU 103 determines that, in the synchronizing devices whose connection requests have been received in step S607, there is a synchronizing device that has not received the time information (NO in step S612), the process returns to step S611. In step S611, the CPU 103 continues the transmission of the time information to the remaining synchronizing devices. If the CPU 103 determines that the time information is received by all synchronizing devices (YES in step S612), the process proceeds to step S613.

In step S613, the CPU 103 notifies the completion of the time synchronization. In this process, the CPU 103 displays a screen like a screen 806 in Fig. 8 on the display unit 106. Then, the process ends.

The case has been described where the CPU 103 determines in step S606 that the instruction for setting its own device as the reference device is received.

Next, the case is described where the CPU 103 determines in step S606 that the instruction for setting its own device as a synchronizing device is received. In step S606, if the CPU 103 determines that the instruction for setting its own device as the synchronizing device is received, the process proceeds to step S614.

In step S614, the CPU 103 receives an instruction for starting a process to receive the time information of the reference device. In this process, the CPU 103 displays a screen like a screen 807 in Fig. 8. On the screen 807, a notification "PRESS "OK" IF REFERENCE DEVICE IS READY." is displayed. With the display, the CPU 103 notifies the user that after the reference device is ready for sending the time information, an instruction for starting a process for receiving the time information is to be issued.

The preparation for sending the time information by the reference device is completed when the process implemented in the reference device proceeds to step S607. Similarly to step S601, the "OK" button and the "CANCEL" button are displayed together. The user can select the buttons via the operation unit 107. If the user selects the "OK" button, an instruction for receiving the time information in the reference device can be issued.

In step S615, the CPU 103 determines whether the instruction for receiving the time information has been received. If the CPU 103 determines that the "CANCEL" button is selected (CANCEL in step S615), the process ends. If the CPU 103 determines that the "OK" button is selected (YES in step S615), the process proceeds to step S616.

In step S616, the CPU 103 sends a connection request to the reference device via the communication unit 108. This process corresponds to the processes in step S502 and the step S505 in Fig. 5. In this step, the CPU 103 displays a screen like a screen 808 in Fig. 8 on the display unit 106 to notify the user that the process is being performed. The screen is similar to the screen 805, and consequently, its description is omitted.

In step S617, the CPU 103, via the communication unit 108, establishes connection with the reference device, and receives the time information in the reference device. This process corresponds to the processes in step S509 and the step S510, and in step S513 and step S516 in Fig. 5. The time information is the information sent in the process in step S611 performed in the reference device. In this process, the CPU 103 displays a screen like a screen 808 in Fig. 8 on the display unit 106. The screen is similar to the screen 805 in Fig. 8, and consequently, its description is omitted. On completion of the reception, the CPU 103 sends a signal indicating the completion of the time information reception to the reference device.

In step S618, the CPU 103 determines whether the reception of the time information from the reference device is completed. If the CPU 103 determines that the reception of the time information from the reference device is not completed (NO in step S618), the process returns to step S617. If the CPU 103 determines that the reception of the time information from the reference device is completed (YES in step S618), the process proceeds to step S619.

In step S619, the CPU 103 overwrites the time information stored in the clock unit 110 with the time information received from the reference device. This process corresponds to the processes in step S514 and step S517 in Fig. 5. Then, the process proceeds to step S613.

In step S613, the CPU 103 notifies the completion of the time synchronization. In this process, the CPU 103 displays a screen like a screen 809 in Fig. 8 on the display unit 106. Then, the process ends.

The case has been described where the CPU 103 determines in step S606 that the instruction for setting its own device as the synchronizing device has been received.

As described above, the information processing apparatus according to the embodiment, in performing the time synchronization, notifies the user that there is a possibility that the time can be shifted after the time synchronization is performed. With the display, the user can be notified that the time can be shifted after the time synchronization process is performed.

In the first embodiment, irrespective of whether the external clock device 300 is connected to the information processing apparatuses, the user is notified that the time to be synchronized can be shifted after the synchronization. In the second embodiment, in a case where the external clock device 300 is connected to the information processing apparatuses, the user is notified that the time to be synchronized can be shifted after the synchronization.

The embodiment is similar to the first embodiment, and consequently, descriptions of the similar parts are omitted, and feature points in the embodiment are mainly described.

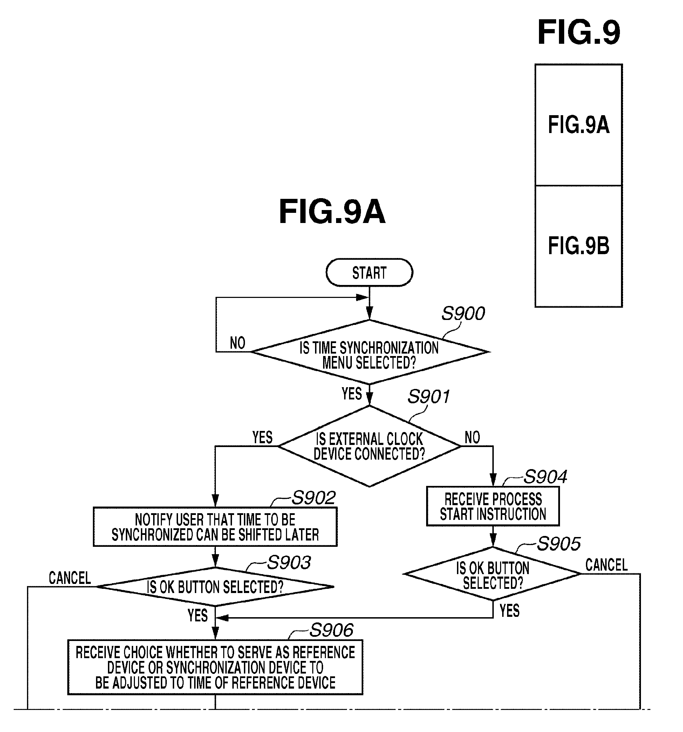

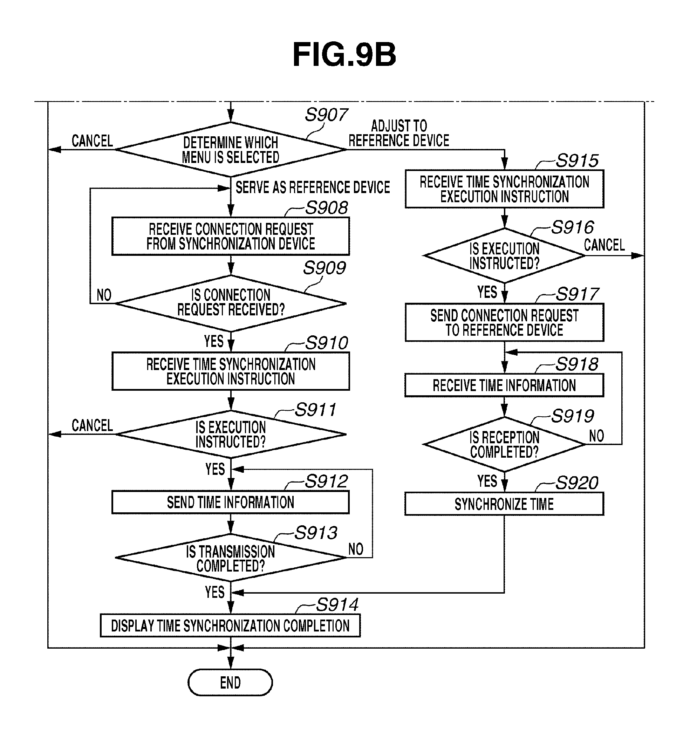

Fig. 9 is a flowchart illustrating processes for synchronizing the time information in the clock units 110 in the information processing apparatus 100, the information processing apparatus 400, and the information processing apparatus 500 according to an embodiment. The processes illustrated in the flowchart are, for example, started in response to turning-on of the power of an information processing apparatus.

Hereinafter, each process illustrated in the flowchart in Fig. 9 is described.

In step S900, the CPU 103 receives an instruction for selection of a menu for performing the time synchronization with the other devices via the operation unit 107. Through the menu selection, the user can input an instruction for performing the time synchronization with the other devices. If the CPU 103 determines that the menu for performing the time synchronization with the other devices is not selected (NO in step S900), the process in this step is repeated. If the CPU 103 determines that the menu for performing the time synchronization with the other devices is selected (YES in step S900), the process proceeds to step S901.

In step S901, the CPU 103 of an information processing apparatus performing the process determines whether the external clock device 300 is connected to the information processing apparatus. This determination of the CPU 103 is an example of the first determination unit. If the CPU 103 determines that the external clock device 300 is not connected (NO in step S901), the process proceeds to step S904. In the example in Fig. 1, the information processing apparatus 400 and the information processing apparatus 500 are not connected to the external clock device 300. Consequently, if the process is performed in the information processing apparatus 400 and the information processing apparatus 500, the process proceeds to step S904.

If the CPU 103 determines that the external clock device 300 is connected (YES in step S901), the process proceeds to step S902. For example, in the example in Fig. 1, the information processing apparatus 100 is connected to the external clock device 300. Consequently, if the process is performed in the information processing apparatus 100, the process proceeds to step S902.

First, the case is described where, in step S901, the CPU 103 determines that the external clock device 300 is connected.

In step S902, a process similar to that in step S601 in Fig. 6 is performed. The CPU 103 displays a message like the one on the screen 701 in Fig. 7, and the user is notified that the time to be synchronized can be shifted. As mentioned above, the process in this step is performed, if the CPU 103 determines, in step S900, that the external clock device 300 is connected to its own device. In other words, the information processing apparatuses according to this embodiment warn the user if the external clock device 300 is connected.

In step 5903, the CPU 103 determines whether the "OK" button is selected or the "CANCEL" button is selected via the operation unit 107. If the CPU 103 determines that the "CANCEL" button is selected (CANCEL in step S903), the process ends. If the CPU 103 determines that the "OK" button is selected (YES in step S903), the process proceeds to step S906. The processes after this step are similar to those after step S605 in Fig. 6, and consequently, the descriptions are omitted.

Next, the case where, in step S901, the CPU 103 determines that the external clock device 300 is not connected is described.

In step S904, a process similar to that in step S603 in Fig. 6 is performed. The CPU 103 displays a message like the one on the screen 801 in Fig. 8, and the user is urged to determine whether to synchronize the time with the time in another device. As mentioned above, the process in this step is performed, if the CPU 103 of the information processing apparatus performing the process determines, in step S901, that the external clock device 300 is not connected to the information processing apparatus. In other words, the information processing apparatuses according to this embodiment do not warn the user that the time to be synchronized can be shifted if the external clock device 300 is not connected. The processes after this step are similar to those after step S604 in Fig. 6, and consequently, the descriptions are omitted.

The flowchart in Fig. 9 has been described.

As described above, the information processing apparatuses according to this embodiment, if the external clock device is not connected, do not issue the notification that the time to be synchronized can be shifted. Consequently, the user can be notified at more appropriate timing that there is a possibility that the time can be shifted after the time synchronization.

In the second embodiment, whether the external clock device 300 is connected to the information processing apparatus is determined. In a third embodiment, it is determined whether the time adjustment function using the external clock device 300 is turned on.

The third embodiment is similar to the second embodiment in many points, and consequently, descriptions of the similar parts are omitted, and mainly feature points in the third embodiment are described.

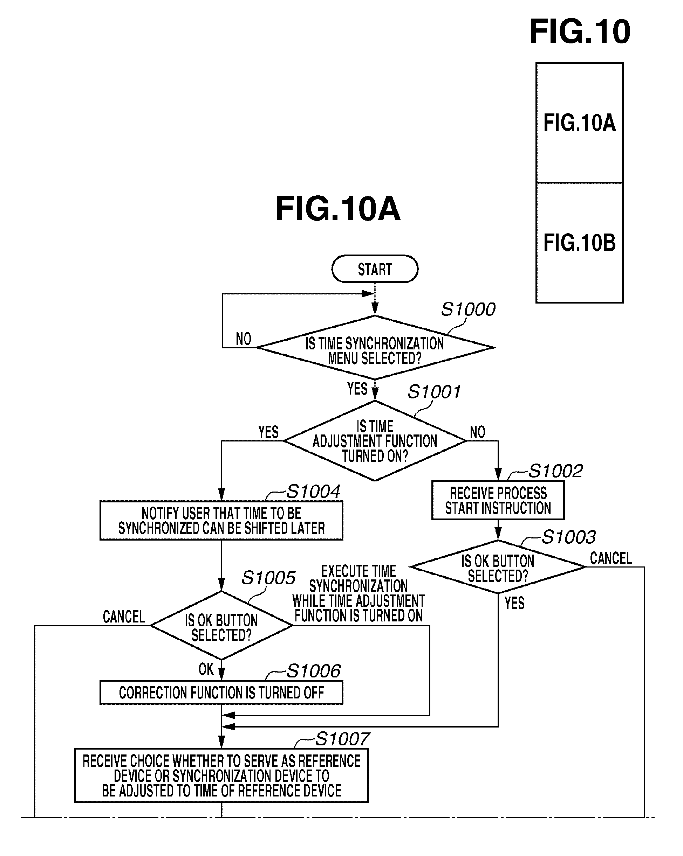

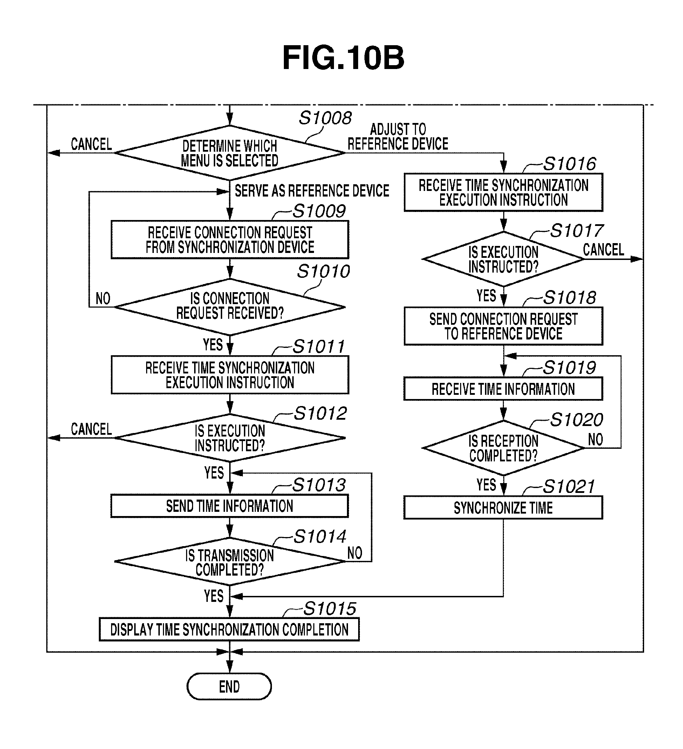

Fig. 10 is a flowchart illustrating processes for synchronizing the time information in the clock units 110 in the information processing apparatus 100, the information processing apparatus 400, and the information processing apparatus 500 according to this embodiment. The processes illustrated in the flowchart are, for example, started in response to turning-on of the power of the information processing apparatus.

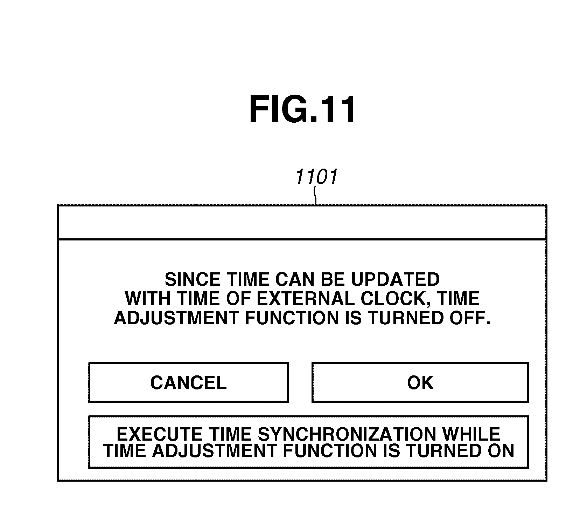

With reference to the display screen in Fig. 11, the processes in the flowchart in Fig. 10 are described.

In step S1000, the CPU 103 receives an instruction for selection of a menu for performing the time synchronization with the other devices via the operation unit 107. Through the menu selection, the user can input an instruction for performing the time synchronization with the other devices. If the CPU 103 determines that the menu for performing the time synchronization with the other devices is not selected (NO in step S1000), the process in this step is repeated. If the CPU 103 determines that the menu for performing the time synchronization with the other devices is selected (YES in step S1000), the process proceeds to step S1001.

In step S1001, the CPU 103 determines whether the time adjustment function is turned on. This determination of the CPU 103 is an example of the second determination unit. If the CPU 103 determines that the time adjustment function is not turned on (NO in step S1001), the process proceeds to step S1002 and step S1003. In steps S1002 and 1003, processes similar to those in steps S904 and S905 in Fig. 9 are performed. If the CPU 103 determines that the time adjustment function is turned on (YES in step S1001), the process proceeds to step S1004.

In step S1004, the CPU 103 notifies the user that the time adjustment function is to be turned off and then the time synchronization is to be performed. For example, the CPU 103 displays a screen like a screen 1101 in Fig. 11 on the display unit 106. On the screen 1101, the message "TIME CAN BE UPDATED WITH TIME IN EXTERNAL CLOCK. TIME ADJUSTMENT FUNCTION IS TURNED OFF." is displayed. With the display, the user can be notified that the time in its own device can be shifted by the time adjustment function. Further, buttons displaying "CANCEL", "OK", and "EXECUTE TIME SYNCHRONIZATION WHILE TIME ADJUSTMENT FUNCTION IS TURNED ON" are displayed together. The user can select the buttons via the operation unit 107.

In step S1005, the CPU 103 determines which button is selected via the operation unit 107. If the CPU 103 determines that the "CANCEL" button is selected (CANCEL in step S1005), the process ends. If the CPU 103 determines that the "OK" button is selected (OK in step S1005), the process proceeds to step S1006. In step S1006, the CPU 103 turns off the time adjustment function. In other words, for example, if the user instructs to perform the time synchronization without noticing that the time adjustment function is enabled, the operation of the time adjustment function can be stopped.

The operation can prevent updating of the time synchronized with the other devices by the time adjustment function in the following processes. Then, the process proceeds to step S1007. If the CPU 103 determines that the "EXECUTE TIME SYNCHRONIZATION WHILE TIME ADJUSTMENT FUNCTION IS TURNED ON" button is selected (EXECUTE TIME SYNCHRONIZATION WHILE TIME ADJUSTMENT FUNCTION IS TURNED ON in step S1005), the CPU 103 does not turn off the time adjustment function, and the process proceeds to step S1007.

The processes after step S1007 are similar to those after step S906 in Fig. 9, and consequently, the descriptions are omitted.

The processes for synchronizing the time information in the clock units 110 in the information processing apparatus 100, the information processing apparatus 400, and the information processing apparatus 500 according to the embodiment have been described. The information processing apparatuses according to the embodiment determine whether the time adjustment function is turned on. If the CPU 103 determines that the time adjustment function is turned on, the information processing apparatus can start the time synchronization after turning off the time adjustment function. With the processes, for example, even if the user starts the time synchronization with the other devices while the user forgets that the time adjustment function is turned on, shift of the time by the time adjustment function can be prevented.

In the fourth embodiment, if the selection as the reference device has been made, the time is adjusted to a more correct time by the time adjustment function, and the time synchronization is performed.

The embodiment is similar to the second embodiment in many points, and consequently, descriptions of the similar parts are omitted, and mainly feature points in the embodiment are described.

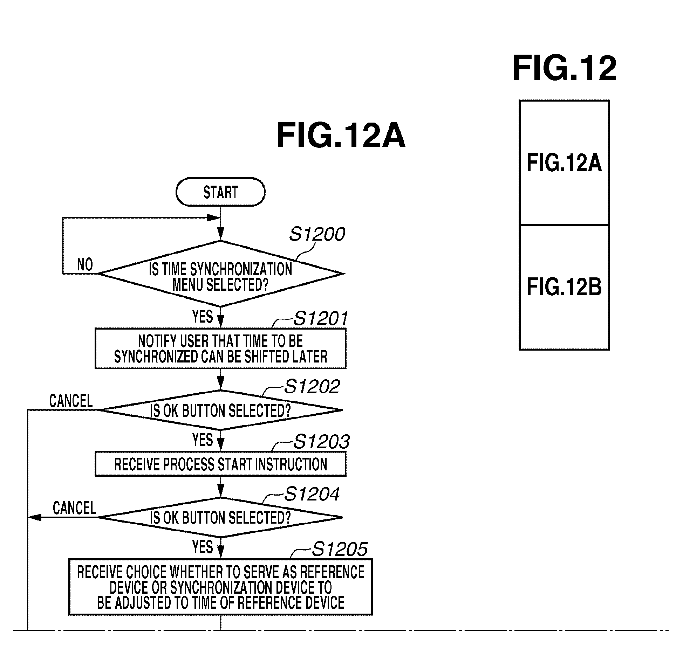

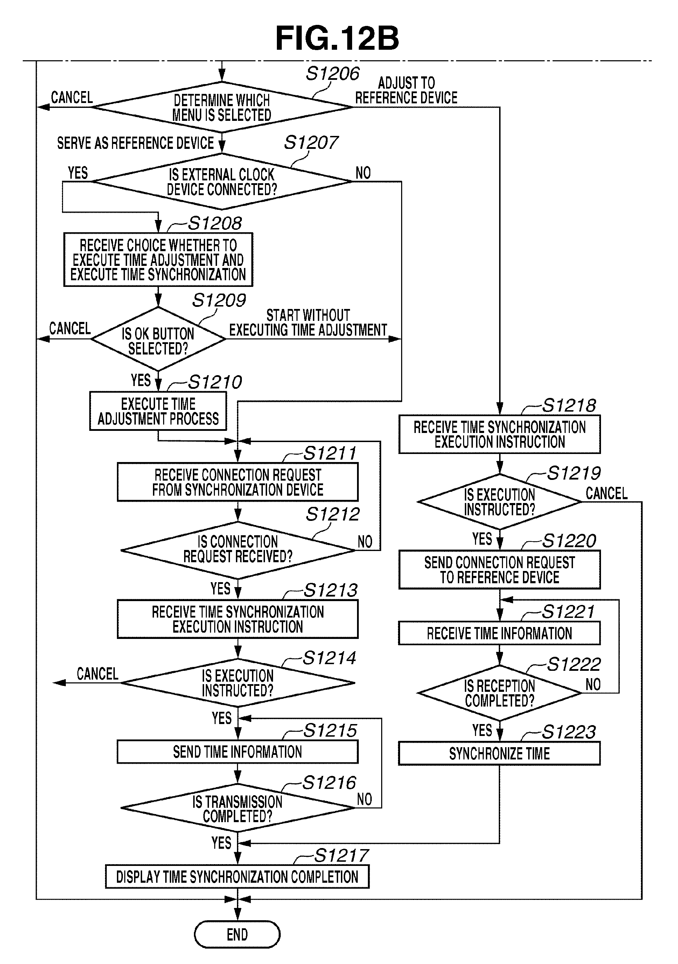

Fig. 12 is a flowchart illustrating processes for synchronizing the time information in the clock units 110 in the information processing apparatus 100, the information processing apparatus 400, and the information processing apparatus 500 according to the embodiment. The processes illustrated in the flowchart are, for example, started in response to turning-on of the power of the information processing apparatus.

With reference to the display screen in Fig. 11, the processes in the flowchart in Fig. 12 are described.

The processes from step S1200 to step S1206 are similar to those from step S600 to step S606 in Fig. 6, and consequently, the descriptions are omitted.

In step S1206, if the CPU 103 determines that an instruction for setting its own device as the reference device that transmits the reference time for the time synchronization, is received (SERVE AS REFERENCE DEVICE in step S1206), the process proceeds to step S1207.

In step S1207, the CPU 103 of the information processing apparatus performing the process determines whether the external clock device 300 is connected to the information processing apparatus. If the CPU 103 determines that the external clock device 300 is not connected (NO in step S1207), the process proceeds to step S1211. If the CPU 103 determines that the external clock device 300 is connected (YES in step S1207), the process proceeds to step S1208.

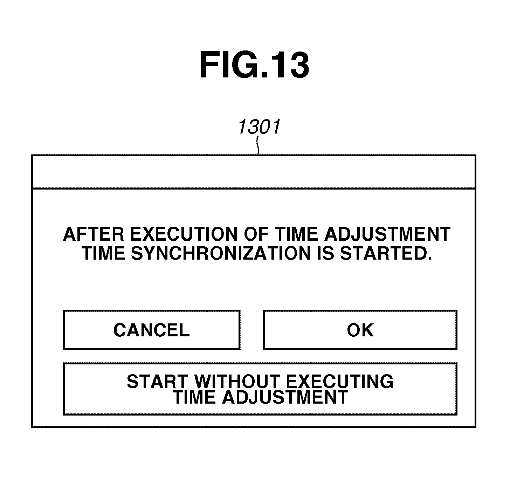

In step S1208, the CPU 103 notifies the user that the time is to be adjusted to more correct time, and then the time synchronization is to be performed. For example, the CPU 103 displays a screen like a screen 1301 in Fig. 13 on the display unit 106. On the screen 1301, a message "AFTER EXECUTION OF TIME ADJUSTMENT TIME SYNCHRONIZATION IS STARTED." is displayed. Further, buttons displaying "CANCEL", "OK", and "START WITHOUT EXECUTING TIME ADJUSTMENT" are displayed together. The user can select the buttons via the operation unit 107.

In step S1209, the CPU 103 determines which button is selected via the operation unit 107. If the CPU 103 determines that the "CANCEL" button is selected (CANCEL in step S1209), the process ends. If the CPU 103 determines that the "OK" button is selected (YES in step S1209), the process proceeds to step S1210. In step S1210, the CPU 103 performs the time adjustment process with the external clock device 300. The time adjustment process performed in this step is not regularly performed, but performed only once.

Then, the process proceeds to step S1211. If the CPU 103 determines that the "START WITHOUT EXECUTING TIME ADJUSTMENT" button is selected (START WITHOUT EXECUTING TIME ADJUSTMENT in step S1209), the CPU 103 does not perform the time adjustment process and the process proceeds to step S1211.

The processes after step S1211 are similar to those after step S607 in Fig. 6, and consequently, the descriptions are omitted.

The processes for synchronizing the time information in the clock units 110 in the information processing apparatus 100, the information processing apparatus 400, and the information processing apparatus 500 according to this embodiment have been described. In this embodiment, if the selection as the reference device has been made, the time is adjusted to more correct time by the time adjustment function, and the time synchronization is performed. The processes enable the information processing apparatuses to synchronize the time with more correct time information.

In the above-described embodiments, the user determines whether an information processing apparatus is to be the reference device. The time information of the information processing apparatus connected to the external clock device, however, is likely to be more correct than the time information of an information processing apparatus not connected to the external clock device. In other words, in performing the time synchronization among the information processing apparatuses, the information processing apparatus connected to the external clock device should be the reference device to perform the time synchronization because it has more correct time information.

Accordingly, in the fifth embodiment, depending on whether the external clock device is connected to the information processing apparatus, it is determined whether the information processing apparatus is the reference device or the synchronizing device.

The embodiment is similar to the second embodiment in many points, and consequently, descriptions of the similar parts are omitted, and mainly feature points in the embodiment are described.

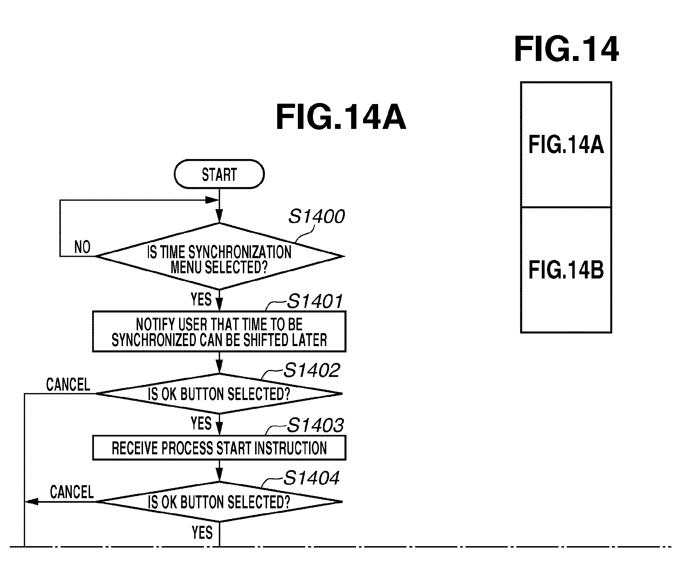

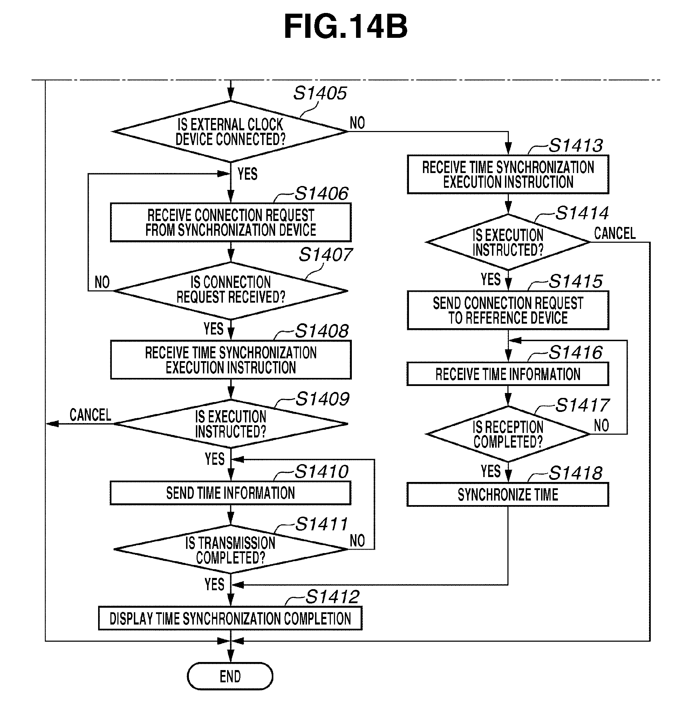

Fig. 14 is a flowchart illustrating processes for synchronizing the time information in the clock units 110 in the information processing apparatus 100, the information processing apparatus 400, and the information processing apparatus 500 according to the embodiment. The processing illustrated in this flowchart is started, for example, in response to reception of a selection menu for performing the time synchronization with the other devices via the operation unit 107.

Hereinafter, each process illustrated in the flowchart in Fig. 14 is described.

The processes from step S1400 to step S1404 are similar to those from step S600 to step S604 in Fig. 6, and consequently, the descriptions are omitted.

In step S1405, the CPU 103 of an information processing apparatus performing the process determines whether the external clock device 300 is connected to the information processing apparatus. If the CPU 103 determines that the external clock device 300 is connected (YES in step S1405), the process proceeds to step S1406. In steps S1406 to S1412, processes similar to those in steps S607 to S613 in Fig. 6 are performed. In other words, if the CPU 103 determines that the external clock device 300 is connected, the information processing apparatus sets itself as the reference device. In the example in Fig. 1, the information processing apparatus 100 to which the external clock device 300 is connected automatically sets itself as the reference device.

If the CPU 103 determines that the external clock device 300 is not connected (NO in step S1405), the process proceeds to step S1413. In steps S1413 to S1418, processes similar to those in steps S614 to S619 in Fig. 6 are performed. In other words, if the CPU 103 of an information processing apparatus performing the method determines that the external clock device 300 is not connected to the information processing apparatus, the information processing apparatus sets itself as the synchronizing device. In the example in Fig. 1, the information processing apparatus 400 and the information processing apparatus 500 to which the external clock device 300 is not connected are automatically sets themselves as the synchronizing devices.

The processes for synchronizing the time information in the clock units 110 in the information processing apparatus 100, the information processing apparatus 400, and the information processing apparatus 500 according to this embodiment have been described. In this embodiment, depending on whether the external clock device is connected, it is determined whether the information processing apparatus set itself as the reference device or as the synchronizing device. The processing enables more appropriate time synchronization.

### Other Embodiments

In the above-described embodiments, before the determination is made whether it is to be the reference device or the synchronizing device in the time synchronization, the information processing apparatus notifies the user that the time to be synchronized can be shifted. That notification can be made, for example, after the determination, or after the time is synchronized.

In the above-described embodiments, in the time synchronization, the user is notified that the time to be synchronized can be shifted. In addition, also in the time adjustment, the user may be notified that the time to be synchronized can be shifted. For example, in a case where the user turns on the time adjustment function, or the user inputs an instruction for adjusting the time information at desired timing, a message "IF YOU EXECUTE TIME ADJUSTMENT, SYNCHRONIZED TIME CAN BE SHIFTED" can be displayed. With the display, the user can be notified that the time synchronized by the time synchronization processing in the time adjustment can be shifted.

Further, it may be determined whether time synchronization processing has been performed at least once, after the power of the information processing apparatus 100 was turned on, and depending on the determination result, whether to perform the notification can be determined. For example, in a case where the menu of the time adjustment is selected when it is determined that time synchronization has been performed at least once, the user is notified that the synchronized time can be shifted.

### Other Embodiments

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g. computer-readable medium).

While the present invention has been described with reference to embodiments, it is to be understood that the invention is not limited to the disclosed embodiments.

## Claims

1. An information processing apparatus (100) for communicating with a first external device (300) storing first time information and a second external device (400, 500) storing second time information, the information processing apparatus (100) comprising:
storage means for storing third time information;
reception means (308) for receiving first time information from the first external device;
time adjustment means for regularly adjusting the third time information based on first time information received by the reception means (308) to synchronize the third time information with the first time information;
operation means (107) for receiving a synchronization instruction from a user;
time synchronization means for communicating with the second external device and synchronizing the second time information and the third time information if the synchronization instruction is received by the operation means (107); and
notification means for, in a case of the synchronization instruction being received by the operation means (107), notifying the user that the third time information can be adjusted by the time adjustment means.

2. The information processing apparatus (100) according to claim 1, wherein the notification means is arranged to, if the first external device and the information processing apparatus (100) are not connected with each other, not notify the user that the third time information can be adjusted by the time adjustment means.

3. The information processing apparatus (100) according to any preceding claim, wherein the time adjustment means is arranged to, if the time synchronization means performs the processing for adjusting the second time information based on the third time to synchronize the third time information and the second time information, adjust the third time information based on the first time information before the third time information and the second time information are synchronized by the time synchronization means.

4. The information processing apparatus (100) according to any preceding claim, wherein the time adjustment means is arranged to, if the first external device and the information processing apparatus (100) are connected with each other, adjust the second time information based on the third time information.

5. The information processing apparatus (100) according to any preceding claim, further comprising:
setting means for setting the time information adjustment performed by the time adjustment means, to be enabled or disabled,
wherein the notification means is arranged to not notify the user if the setting means sets the time information adjustment performed by the time adjustment means to be disabled.

6. The information processing apparatus (100) according to claim 5, wherein the setting means is arranged so that if the time synchronization means performs the time synchronization, it sets the time information adjustment, performed by the time adjustment means, to be disabled.

7. The information processing apparatus (100) according to claim 5, wherein the notification means is arranged to, if the time adjustment means sets the time information adjustment performed by the time adjustment means to be enabled, notify the user that the time information synchronized by the time synchronization means can be adjusted.

8. The information processing apparatus (100) according to any preceding claim, wherein the operation means (107) is arranged to further receive an instruction for selection of whether to perform a process for adjusting the second time information based on the third time information to synchronize the third time information and the second time information, or to perform a process for adjusting the third time information based on the second time information to synchronize the third time information and the second time information.

9. The information processing apparatus (100) according to any preceding claim, wherein the first external device comprises any one of a GPS satellite, a base station for cellular phones, or a time calibration signal transmitter station.

10. The information processing apparatus (100) according to any preceding claim, wherein the second external device comprises a camera.

11. The information processing apparatus (100) according to any preceding claim, further comprising:
imaging means for capturing an image of an object and generating an image,
wherein the third time information is used for a shooting time associated with an image generated by the imaging means.

12. A method for controlling an information processing apparatus (100) for communicating with a first external device storing first time information and a second external device storing second time information, the method comprising:
storing third time information;
receiving first time information from the first external device;
regularly adjusting the third time information based on first time information received by the reception means (308);
receiving a synchronization instruction from a user;
communicating with the second external device to synchronize the second time information and the third time information if the synchronization instruction is received; and
if the synchronization instruction is received, notifying the user that the third time information can be adjusted based on the first time information.

13. A computer program comprising machine executable instructions that when executed cause a machine to function as an information processing apparatus (100) according to any one of claims 1 to 11.

14. A machine readable medium storing the computer program according to claim 13.
